# EUROPÄISCHE PATENTSCHRIFT

(11) **EP 1 705 439 B1**
(45) Veröffentlichungstag und Bekanntmachung des Hinweises auf die Patenterteilung: **29.08.2012**
(21) Anmeldenummer: 06005755.1
(22) Anmeldetag: 21.03.2006
(51) Int. Cl.: F25D 11/00, F25D 25/04, F25D 17/02, A23B 4/06, A23B 7/04, B60P 3/20

(54) **Fahrbare Kühlvorrichtung**
Mobile cooling device
Dispositif de refroidissement mobile

(30) Priorität: 22.03.2005 DE 102005013313
(43) Veröffentlichungstag der Anmeldung: 27.09.2006
(73) Patentinhaber: Klüe, Sven-Olaf, 3074 Muri (CH)
(72) Erfinder: Klüe, Ulrich, 21502 Geesthacht (DE)
(74) Vertreter: Glawe, Delfs, Moll

(56) Entgegenhaltungen:
- EP-A- 0 282 122
- DE-A1- 10 131 398
- GB-A- 1 330 282
- US-A- 2 513 355
- US-A- 3 961 925
- US-A- 4 168 597
- US-B1- 6 202 434

## Beschreibung

Die Erfindung betrifft eine fahrbare Kühlvorrichtung für von Hand tragbare Gegenstände, insbesondere Lebensmittel enthaltende Behälter, mit einer Abstellfläche für die Gegenstände und mit einem Wasserkreislauf, der Austrittsöffnungen oberhalb der Abstellfläche, aus denen das Wasser heraustritt, Einrichtungen zum Auffangen des Wassers, Pumpeneinrichtungen zum erneuten Befördern des Wassers zu den Öffnungen und ein Kühlaggregat zum Kühlen des Wassers aufweist.

Es besteht häufig der Bedarf, gewisse Gegenstände, insbesondere in Behältern verpackte Lebensmittel, schnell und wirksam zu kühlen. Dabei wird durch Kühlung mit gekühltem Wasser wesentlich schneller eine Abkühlung der Gegenstände erreicht, als wenn nur mit kalter Luft gekühlt wird. Man möchte auch häufig die Gegenstände, insbesondere Lebensmittel wie z. B. Ost oder Gemüse nicht erst zu einem Kühlhaus oder einer anderen stationären Anlage bringen, sondern sie vor Ort schnell und wirksam kühlen.

Zu diesem Zweck ist eine fahrbare Kühlvorrichtung der eingangs genannten Art bekannt (US 6 202 434 B1), die auf einem Sattelschlepperanhänger angeordnet ist. Die Vorrichtung kann also leicht von einem Ort zum anderen gebracht werden. Das zu kühlende Gut wird in dem Laderaum des Sattelschlepperanhängers gestapelt. Der Laderaum wird anschließend verschlossen, und es wird gekühltes Wasser im Kreislauf von oben über das zu kühlende Gut geleitet. Dadurch ist eine schnelle Kühlung möglich. Das so gekühlte Gut kann auch beim Transport weiterhin gekühlt werden.

In vielen Fällen ist aber eine solche dauerhafte Kühlung gar nicht erforderlich bzw. nicht gewünscht. So hat es sich als sehr zweckmäßig erwiesen, viele Arten von Gemüse und Obst direkt nach der Ernte erst einmal schnell zu kühlen, damit es dann anschließend in normalen Kühlfahrzeugen wegtransportiert werden kann. Diese normalen Kühlfahrzeuge arbeiten aber nicht mit Flüssigkeitskühlung, sondern kühlen den Laderaum wie in einem Kühlschrank mit kalter Luft, was möglicherweise durch forcierte Luftzirkulation unterstützt wird. Würde man auf die vorherige Kühlung mit Wasser verzichten, so würde es sehr lange dauern, bis das in die Transportfahrzeuge eingebrachte Gut ausreichend gekühlt ist.

Durch die fahrbare Kühlvorrichtung der eingangs genannten Art ist zwar eine schnellere Kühlung möglich. Die Kühlung kann aber nur chargenweise erfolgen. So kann es bei der Ernte eine beträchtliche Zeit dauern, bis die Kühlvorrichtung gefüllt ist. Bis zu diesem Zeitpunkt ist das Gut, insbesondere Gemüse oder Obst, der Umgebungstemperatur ausgesetzt. Wird anschließend der Kühlvorgang durchgeführt, so kann während dieser Zeit neu geerntetes Gemüse oder Obst nicht gekühlt werden. Es muß vielmehr während des Kühlbetriebs und während des anschließenden Entladens außerhalb der Kühlvorrichtung verbleiben und wird daher der möglicherweise beträchtlichen Umgebungstemperatur ausgesetzt.

Die Aufgabe der Erfindung besteht in der Erschaffung einer Vorrichtung der eingangs genannten Art, mit der ohne Unterbrechung laufend neu angelieferte Gegenstände, insbesondere Lebensmittel enthaltende Behälter und die darin enthaltenen Lebensmittel schnell abgekühlt werden können.

Die erfindungsgemäße Lösung besteht darin, dass die Abstellfläche U-förmig und als Fördereinrichtung ausgebildet ist, wobei die Schenkel des U bei einer Stirnwand der Vorrichtung enden, die dort mit einer oder mehreren Öffnungen zum Einsetzen und Entnehmen der Gegenstände versehen ist.

Bei der erfindungsgemäßen Kühlvorrichtung ist es daher möglich, laufend an der Stirnwand auf das eine Ende der U-förmigen Fördereinrichtung die Gegenstände, insbesondere die Lebensmittel enthaltenden Behälter einzusetzen, während sie auf der anderen Seite nach Kühlung wieder entnommen werden können.

Es ist zwar bekannt, in fahrbaren Vorrichtungen Gegenstände auf einem U-förmigen Förderer zu bewegen, die dabei mit Flüssigkeit berieselt werden (DE 101 31 398 A1). Dabei handelt es sich aber um die Reinigung von Einkaufswagen. Bei diesem völlig anderen technischen Gebiet soll eine Kühlung nicht bewirkt werden; man wird im Gegensatz dazu eher zur Reinigung erhitztes Wasser verwenden. Bei diesem Stand der Technik spielt es auch keine Rolle, dass die Vorrichtung an einer Stirnseite offen ist. Solche Öffnungen versucht man bei Kühlvorrichtungen im Allgemeinen zu vermeiden, insbesondere wenn diese nicht wie bei Tiefkühlverkaufstruhen nach oben offen sind, sondern zur Seite, so dass kalte Luft abfließen kann. Erfindungsgemäß wurde nun herausgefunden, dass die Öffnung bzw. Öffnungen die Kühlwirkung nicht wesentlich beeinträchtigen und dass trotzdem ein wirksames und schnelles Kühlen der Gegenstände möglich ist.

Es wäre zwar denkbar, das gekühlte Wasser mit Düsen auf die Gegenstände zu sprühen. Zweckmäßigerweise ist aber oberhalb der Abstellfläche eine Wanne angeordnet, in die das gekühlte Wasser eingefüllt wird. Die Wanne weist an ihrem Boden die Austrittsöffnungen auf, aus denen dann das Wasser in ähnlicher Weise wie bei einer Gießkanne austritt. Auf diese Weise ist ein gleichförmiger Wasserdurchsatz mit wesentlich größeren Mengen pro Zeiteinheit möglich, als dies mit Düsen zu erreichen ist.

Zweckmäßigerweise weist das Kühlaggregat einen Wärmetauscher auf, der oberhalb eines Vorratsbehälters für gekühltes Wasser angeordnet ist, wobei die Kühlvorrichtung eine Pumpe zum Fördern des Wassers von den Auffangeinrichtungen zum Wärmetauscher und eine Pumpe zum Pumpen des gekühlten Wassers vom Vorratsbehälter zu den Austrittsöffnungen aufweist.

Zweckmäßigerweise weisen die Auffangeinrichtungen für das Wasser, das über die Gegenstände herabläuft oder tropft, eine Wanne auf, die sich über die Grundfläche der Fördereinrichtung und über dieselbe hinaus erstreckt, so dass alles herabtropfende Wasser aufgefangen werden kann.

Die zu kühlenden Gegenstände sind häufig verunreinigt, was insbesondere bei Gemüse und Obst, das gerade geerntet wurde, der Fall ist. Die erfindungsgemäße Kühlvorrichtung kann in diesem Fall auch eine Reinigungswirkung übernehmen, da das Wasser in ausreichenden Mengen über die Gegenstände geleitet werden kann, so dass diese sauber gespült werden. Zweckmäßigerweise ist in diesem Falle im Kühlkreislauf ein Schmutzfilter vorgesehen. Dieser Schmutzfilter wird zuverlässig Schmutzteilchen aus dem Kühlkreislauf entfernen, obwohl Sandkörner zum größten Teil in der Auffangeinrichtung verbleiben werden, insbesondere, wenn diese eine Wanne ist.

Der Schmutzfilter ist dabei zweckmäßigerweise zwischen Auffangeinrichtung und Kühlaggregat angeordnet, so dass das Kühlaggregat nicht mit dem Schmutz in Berührung kommt.

Insbesondere, wenn die zu kühlenden Gegenstände wasserlösliche Verunreinigungen enthalten und/oder wenn die Gegenstände gleichzeitig einer Behandlung - z.B. mit Chemikalien - unterzogen werden sollen, wird zweckmäßigerweise vorgesehen, dass im Kühlkreislauf eine Wasseraufbereitungs- und/oder -konditioniereinrichtung vorgesehen ist.

Zweckmäßigerweise wird man vorsehen, dass die Fördereinrichtung ein Förderband mit einstellbarer Geschwindigkeit ist. Auf diese Weise ist eine Anpassung an die Geschwindigkeit möglich, mit der die Gegenstände an die Kühlvorrichtung heran und von der selben wegtransportiert werden.

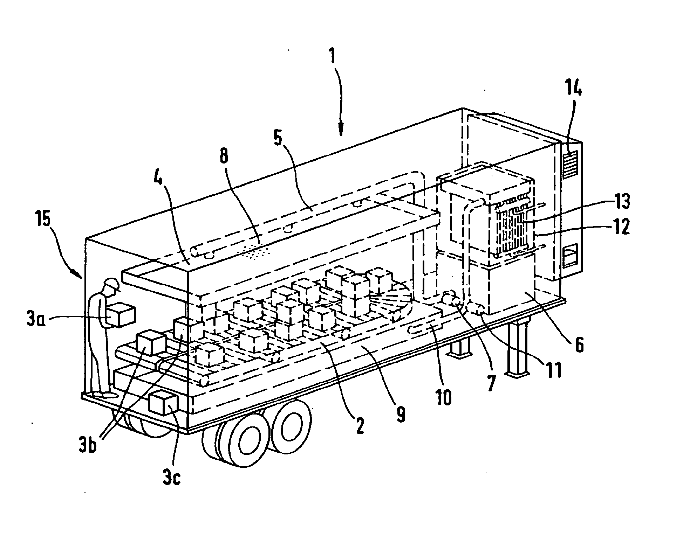

Die Erfindung wird im Folgenden anhand einer vorteilhaften Ausführungsform unter Bezugnahme auf die Figur näher beschrieben, die eine erfindungsgemäße Vorrichtung in perspektivischer Ansicht zeigt.

In der Figur ist ein Sattelschlepperanhänger 1 gezeigt, der als 40-Fuß-Container ausgebildet ist. In dem Container 1 ist ein U-förmiges aus Segmenten gebildetes und auf entsprechenden Rollen gelagertes Förderband 2 angeordnet. Die Enden des U befinden sich dabei an der hinteren Stirnfläche der Vorrichtung 1, die hier ganz oder teilweise bei 15 geöffnet ist. Auf dieses Förderband 2 können einzeln oder, wie in der Figur gezeigt, übereinander Gegenstände 3 aufgesetzt werden. Die Gegenstände haben dabei bei der Ausführungsform der Figur die Form von Kisten oder wasserfesten Kartons, die Obst oder Gemüse enthalten. Ein solcher Gegenstand 3a soll gerade auf das Förderband 2 aufgesetzt werden. Gegenstände 3b befinden sich auf dem Förderband, ein Gegenstand 3c wurde bereits gekühlt und hat das Förderband 2 verlassen. Oberhalb des Förderbandes 2 befindet sich eine Wanne 4 mit flachem Boden, in die über eine Leitung 5 gekühltes Wasser eingefüllt wird. Dieses gekühlte Wasser wird von einem Vorratsbehälter 6 für gekühltes Wasser mit Hilfe einer Pumpe 7 gefördert. Im Boden der Wanne 4 sind Austrittsöffnungen 8 in Form von Löchern vorgesehen, durch die das in die Wanne 4 eingefüllte Wasser gießkannenartig nach unten austritt und sich über die Gegenstände 3 ergießt. Das herabtropfende Wasser wird dann durch eine Wanne 9 aufgefangen und durch eine Leitung 10 sowie eine Pumpe 11 in einen Behälter 12 gepumpt, der Wärmetauscherplatten 13 eines Kühlaggregats 14 aufweist. Dort wird das Wasser gekühlt und gelangt dann anschließend in den Vorratsbehälter 6 für das gekühlte Wasser, von wo es erneut über die Gegenstände 3 geleitet werden kann. Wird das Förderband angetrieben, so können laufend Gegenstände gekühlt werden. Falls die Gegenstände, z.B. frisch geerntetes Obst oder Gemüse, verschmutzt sind, kann im Kühlkreislauf ein in den Figuren nicht gezeigter Schmutzfilter verwendet werden.

Die Durchsatzgeschwindigkeit für die Gegenstände 3 kann einerseits durch Einstellung der Geschwindigkeit des Förderbandes 2 geändert werden. Andererseits ist dies möglich, indem Gegenstände näher zueinander oder sogar übereinander angeordnet werden.

## Patentansprüche

1. Fahrbare Kühlvorrichtung (1) für von Hand tragbare Gegenstände (3), insbesondere Lebensmittel enthaltende Behälter, mit einer Abstellfläche (2) für die Gegenstände (3) und mit einem Wasserkreislauf, der Austrittsöffnungen (8) oberhalb der Abstellfläche (2), aus denen das Wasser heraustritt, Einrichtungen (9) zum Auffangen des Wassers, Pumpeneinrichtungen (7, 11) zum erneuten Befördern des Wassers zu den Öffnungen (8) und ein Kühlaggregat (12,13,14) zum Kühlen des Wassers aufweist, **dadurch gekennzeichnet, dass** die Abstellfläche (2) U-förmig und als Fördereinrichtung ausgebildet ist, wobei die Schenkel des U bei einer Stirnwand der Vorrichtung (1) enden, die dort mit einer oder mehreren Öffnungen (15) zum Einsetzen und Entnehmen der Gegenstände versehen ist.

2. Kühlvorrichtung nach Anspruch 1, **dadurch gekennzeichnet, dass** das Kühlaggregat (12,13,14) einen Wärmetauscher (13) aufweist, der oberhalb eines Vorratsbehälters (6) für gekühltes Wasser angeordnet ist, und dass die Kühlvorrichtung eine Pumpe (11) zum Fördern des Wassers von den Auffangeinrichtungen (9) zum Wärmetauscher (13) und eine Pumpe (11) zum Pumpen des gekühlten Wassers vom Vorratsbehälter (6) zu den Austrittsöffnungen (8) aufweist.

3. Kühlvorrichtung nach Anspruch 1 oder 2, **dadurch gekennzeichnet, dass** oberhalb der Abstellfläche (2) eine Wanne (4) angeordnet ist, in die das gekühlte Wasser eingefüllt wird und die in ihrem Boden die Austrittsöffnungen (8) aufweist.

4. Kühlvorrichtung nach Anspruch 1 bis 3, **dadurch gekennzeichnet, dass** die Auffangeinrichtungen eine Wanne (9) aufweisen.

5. Kühlvorrichtung nach Anspruch 1 bis 4, **dadurch gekennzeichnet, dass** im Kühlkreislauf ein Schmutzfilter vorgesehen ist.

6. Kühlvorrichtung nach Anspruch 1 bis 3, **dadurch gekennzeichnet, dass** der Schmutzfilter zwischen Auffangeinrichtung (9) und Kühlaggregat (12,13,14) angeordnet ist.

7. Kühlvorrichtung nach Anspruch 1 bis 6, **dadurch gekennzeichnet, dass** im Kühlkreislauf eine Wasseraufbereitungs- und/oder -konditioniereinrichtung vorgesehen ist.

8. Kühlvorrichtung nach Anspruch 1 bis 7, **dadurch gekennzeichnet, dass** die Fördereinrichtung (2) ein Förderband mit einstellbarer Geschwindigkeit ist.

## Claims

1. Mobile cooling device (1) for a container containing articles (3), in particular foodstuffs, portable by hand, with a standing surface (2) for the articles (3) and with a water circuit which has above the standing surface (2) outlet orifices (8) from which the water emerges, arrangements (9) for collecting the water, pump arrangements (7, 11) for the renewed conveyance of the water to the orifices (8), and a cooling assembly (12, 13, 14) for cooling the water, **characterized in that** the standing surface (2) is U-shaped and is designed as a conveying arrangement, the legs of the U ending near an end wall of the device (1) which is provided there with one or more orifices (15) for the insertion and removal of the articles.

2. Cooling device according to Claim 1, **characterized in that** the cooling assembly (12, 13, 14) has a heat exchanger (13) which is arranged above a reservoir (6) for cooled water, and **in that** the cooling device has a pump (11) for conveying the water from the collecting arrangements (9) to the heat exchanger (13) and a pump (11) for pumping the cooled water from the reservoir (6) to the outlet orifices (8) .

3. Cooling device according to Claim 1 or 2, **characterized in that**, above the standing surface (2), a trough (4) is disposed, into which the cooled water is introduced and which has the outlet orifices (8) in its bottom.

4. Cooling device according to Claims 1 to 3, **characterized in that** the collecting arrangements have a trough (9).

5. Cooling device according to Claims 1 to 4, **characterized in that** a dirt filter is provided in the cooling circuit.

6. Cooling device according to Claims 1 to 3, **characterized in that** the dirt filter is disposed between the collecting arrangement (9) and cooling assembly (12, 13, 14).

7. Cooling device according to Claims 1 to 6, **characterized in that** a water treatment and/or conditioning arrangement is provided in the cooling circuit.

8. Cooling device according to Claims 1 to 7, **characterized in that** the conveying arrangement (2) is a conveyor belt having an adjustable speed.

## Revendications

1. Dispositif de refroidissement (1) pouvant être déplacé, conçu pour des objets (3) portables à la main, en particulier pour des récipients contenant des produits alimentaires, comportant une surface (2) de dépose des objets (3) et comportant un circuit hydraulique qui présente des orifices d'évacuation (8) au-dessus de la surface (2) de dépose des objets, d'où sort l'eau, des systèmes (9) servant à capter l'eau, des systèmes de pompes (7, 11) servant à acheminer à nouveau l'eau en direction des orifices (8) et un groupe frigorifique (12, 13, 14) servant à refroidir l'eau, **caractérisé en ce que** la surface (2) de dépose des objets est réalisée en forme en U et en tant que système de transport, les branches du U se terminant sur une paroi frontale du dispositif (1) qui est pourvu à cet endroit d'un orifice ou de plusieurs orifices (15) servant à placer et à prélever les objets.

2. Dispositif de refroidissement selon la revendication 1, **caractérisé en ce que** le groupe frigorifique (12, 13, 14) présente un échangeur de chaleur (13), qui est disposé au-dessus d'un réservoir (6) d'eau refroidie, et **en ce que** le système de refroidissement présente une pompe (11) servant à acheminer l'eau des systèmes de captation (9) vers l'échangeur de chaleur (13) et une pompe (11) servant à pomper l'eau refroidie du réservoir (6) vers les orifices d'évacuation (8).

3. Dispositif de refroidissement selon la revendication 1 ou 2, **caractérisé en ce qu'**une cuve (4) est disposée au-dessus de la surface (2) de dépose des objets, dans laquelle cuve est versée l'eau refroidie, et présente dans son fond les orifices d'évacuation (8).

4. Dispositif de refroidissement selon la revendication 1 à 3, **caractérisé en ce que** les systèmes de captation présentent une cuve (9).

5. Dispositif de refroidissement selon la revendication 1 à 4, **caractérisé en ce qu'**un filtre à impuretés est prévu dans le circuit de refroidissement.

6. Dispositif de refroidissement selon la revendication 1 à 3, **caractérisé en ce que** le filtre à impuretés est disposé entre le système de captation (9) et le groupe frigorifique (12, 13, 14).

7. Dispositif de refroidissement selon la revendication 1 à 6, **caractérisé en ce qu'**un système de traitement et/ou de conditionnement de l'eau est prévu dans le circuit de refroidissement.

8. Dispositif de refroidissement selon la revendication 1 à 7, **caractérisé en ce que** le système de transport (2) est une courroie de transport de vitesse réglable.
